# EUROPEAN PATENT SPECIFICATION

(11) **EP 3 133 874 B1**
(45) Date of publication and mention of the grant of the patent: **01.08.2018**
(21) Application number: 16162325.1
(22) Date of filing: 24.03.2016
(51) Int. Cl.: H04W 52/02

(54) **METHOD AND APPARATUS FOR STARTING ENERGY SAVING MODE**
VERFAHREN UND VORRICHTUNG ZUM STARTEN EINES ENERGIESPARMODUS
PROCÉDÉ ET APPAREIL POUR DÉMARRER UN MODE D'ÉCONOMIE D'ÉNERGIE

(30) Priority: 18.08.2015 CN 201510507481
(43) Date of publication of application: 22.02.2017
(73) Proprietor: Xiaomi Inc., Beijing 100085 (CN)
(72) Inventor: HOU, Enxing, Beijing 100085 (CN); MENG, Deguo, Beijing 100085 (CN); SU, Benchang, Beijing 100085 (CN)
(74) Representative: Delumeau, François Guy

(56) References cited:
- EP-A2- 1 361 708
- CN-A- 103 412 636
- US-A1- 2013 012 180
- US-A1- 2013 074 082

## Description

### TECHNICAL FIELD

The present disclosure generally relates to an electronic device field, and more particularly, to a method and an apparatus for starting an energy saving mode.

### BACKGROUND

With the intellectualization development of the electronic devices, the smart devices such as a panel computer, a smart phone, etc. are rapidly popularized, and the users' demands also become higher and higher, and thus more stringent requirements are proposed on the performance of the smart devices. In order to meet the demands of the users, the smart devices are generally configured with higher performance.

For example, in order to improve the starting speed of an application, the smart device may start a plurality of applications in the background in advance, such that once the user wishes to open any one of the applications, the smart device opens the interface of the application directly.

Document US 2013/0074082 A1 discloses a control method and a control device for releasing memory.

Document CN 103412636 A discloses a power saving apparatus and a power-saving method in an intelligent terminal.

Document EP 1 361 708 A2 discloses a power management scheme for use in a wireless device which reduces the power consumption of the network interface module of the wireless device by selectively putting the network interface module into a low-power state for an idle time.

Document US 2013/0012180 A1 discloses systems and methods of mobile device radio use optimization by batching low priority requests.

### SUMMARY

In order to solve the problems existing in the related art, the present disclosure provides a method and an apparatus for starting an energy saving mode, which include following technical solutions.

According to a first aspect of embodiments of the present disclosure, there is provided a method for starting an energy saving mode according to independent claim 1. Further details of the method are set out in the dependent claims 2-4. According to a second aspect of embodiments of the present disclosure, there is provided an apparatus for starting an energy saving mode according to independent claim 5. Further details of the apparatus are set out in the dependent claims 6-8. The advantages and features of the devices according to the embodiments of the present disclosure are the same with those of the above described method and will not be repeated here.

Alternatively, the steps of the method for starting an energy saving mode are determined by computer program instructions.

Consequently, according to a fourth aspect, the invention is also directed to a computer program for executing the steps of the method for starting an energy saving mode as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The solutions provided in embodiments of the present disclosure may have following beneficial effects.

With the method and the apparatus provided by the embodiments of the present disclosure, by acquiring the communication parameter related to communication with the gateway device, the energy saving mode is started if it is determined that the current running state is the idle state according to the communication parameter. In this way, under the premise of meeting a user's demand on a performance of a smart device, a power consumption of the smart device is reduced as possible.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for starting an energy saving mode, according to an example embodiment.
Fig. 2 is a flow chart showing a method for starting an energy saving mode, according to an example embodiment.
Fig. 3 is a block diagram of an apparatus for starting an energy saving mode, according to an example embodiment.
Fig. 4 is a block diagram of an apparatus for starting an energy saving mode, according to an example embodiment.
Fig. 5 is a block diagram of an apparatus for starting an energy saving mode, according to an example embodiment.
Fig. 6 is a block diagram of a device for starting an energy saving mode, according to an example embodiment.

### DETAILED DESCRIPTION

In order to make the objects, technical solutions and advantages of the present disclosure more clear, the present disclosure will be made in detail with reference to embodiments and drawings. The explanatory embodiments of the present disclosure and the illustrations thereof are used to generally understand the present disclosure, but shall not be construed to limit the present disclosure.

Embodiments of the present disclosure provide a method and an apparatus for starting an energy saving mode.

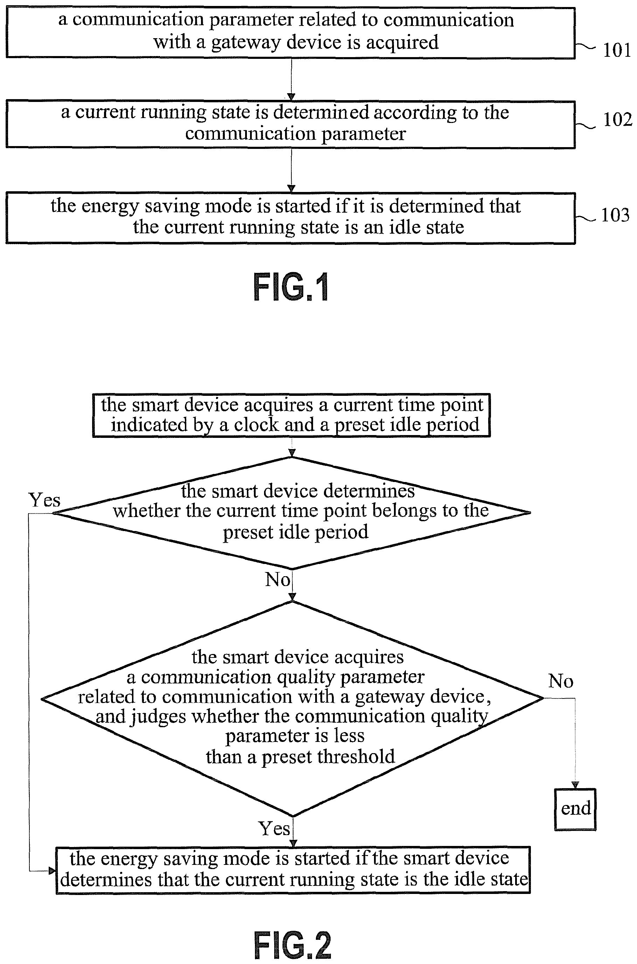

Fig. 1 is a flow chart showing a method for starting an energy saving mode, according to an example embodiment. Referring to Fig. 1, the method for starting an energy saving mode is implemented by a smart device and includes the following steps.

In step 101, a communication parameter related to communication with a gateway device is acquired. The communication parameter includes at least one of a communication quality parameter and a preset idle period.

In step 102, a current running state is determined according to the communication parameter.

In step 103, the energy saving mode is started if it is determined that the current running state is an idle state.

With the method provided by the embodiments of the present disclosure, by acquiring the communication parameter with the gateway device, the energy saving mode is started if it is determined that the current running state is the idle state according to the communication parameter. In this way, under the premise of meeting a user's demand on a performance of the smart device, a power consumption of the smart device is reduced as possible.

In another embodiment, determining a current running state according to the communication parameter, includes:
acquiring a current time point indicated by a clock; and
determining that the current running state is the idle state in response to determining that the current time point belongs to the preset idle period.

In another embodiment, the method further includes:
acquiring at least one operating time in a historical operation record, in which the historical operation record is generated according to operation behaviors of a user; and
determining the preset idle period according to the at least one operating time.

In another embodiment, starting the energy saving mode includes at least one of:
reducing a frequency of communication with the gateway device; and
closing at least one target application already started.

In another embodiment, closing at least one target application already started includes:
determining the at least one target application having a priority lower than a preset priority according to a priority of each application already started; and
closing the at least one target application.

Alternative embodiments of the present disclosure may be formed by combining alternative technical solutions above in any way, which will not be elaborated herein.

Fig. 2 is a flow chart showing a method for starting an energy saving mode, according to an example embodiment. As shown in Fig. 2, the method for starting an energy saving mode is used in a smart device, and includes following steps.

In step 201, the smart device acquires a current time point indicated by a clock and a preset idle period.

In this embodiment, the smart device may be a smart phone, a smart air conditioner, a smart socket and a smart bracelet, etc., which is not limited in this embodiment. The smart device may be connected with a gateway device, thereby connecting to a network. The gateway device may be a router, a wireless hotspot, etc.. The smart device may be provided with a communication module having a wireless communication function, and is connected with the gateway device via the communication module. The communication module may be a WiFi (Wireless-Fidelity) communication module, a Bluetooth communication module, etc., which is not limited in this embodiment.

During a practical application, the higher the performance of the smart device is, the larger its power consumption. If the power consumption of the smart device is overlarge, it may cause an over high temperature and a poor endurance ability, even may influence a normal running of the smart device. In order to reduce the power consumption of the smart device, the smart device may start the energy saving mode and run in the energy saving mode. In the energy saving mode, however, the performance of the smart device is poor. It is difficult to meet the user's demand on the performance, thus reducing the user's experience.

Then, in order to reduce the power consumption of the smart device as possible under the premise of meeting the user's demand on the performance, the smart device may acquire a communication parameter with a gateway device, determine a current running state according to the communication parameter, and determine whether to start the energy saving mode according to the current running state.

The communication parameter may include at least one of a communication quality parameter and a preset idle period. The smart device may determine the current running state according to the preset idle period.

The preset idle period represents a time period when the smart device is in the idle state, that is, if a current time point is within the preset idle period, it means that the smart device is in the idle state without performing too many operations. And, the preset idle period may be determined by the smart device in advance, and be updated during the application process.

For example, the smart device may generate a historical operation record according to operation behaviors of a user on the smart device, and may determine the preset idle period according to the historical operation record.

If the smart device detects that the user performs an operation behavior on the smart device, information such as an operating time and an operating type of the operation behavior is acquired and added to the historical operation record already generated. The historical operation record includes at least one operating time of the operation behavior. The smart device may acquire the at least one operating time from the historical operation record, perform a statistic on the at least one operating time and determine a time period with less user trigger operation behaviors triggered by the user as the preset idle period.

The smart device may preset a plurality of time periods, and determine the time period to which each operating time belongs according to the at least one operating time in the historical operation record, and thus the number of operations of the user in each time period is counted and a time period with the largest number of operations is used as the preset idle period. Or, a preset number of time periods are selected from the plurality of time periods, according to an order of the number of operations from large to small, as the preset idle periods.

For example, by performing a statistic on the operating time of the user, the smart device determines that the user triggers fewest operation behaviors from 11pm to 6am, and thus the time period from 11pm to 6am may be set as the preset idle period.

In step 202, the smart device determines whether the current time point belongs to the preset idle period, if yes, the step 204 is executed, and if no, the step 203 is executed.

In this embodiment, in order to determine the current running state of the smart device, the smart device may acquire the current time point indicated by the clock and determine whether the current time point belongs to the preset idle period. If the current time point belongs to the preset idle period, it means that the smart device is in the idle state currently, and the step 204 is executed; and if the current time point does not belong to the preset idle period, it means that the smart device may not be in the idle state currently, and the step 203 is executed.

In step 203, the smart device acquires a communication quality parameter related to communication with a gateway device, and judges whether the communication quality parameter is less than a preset threshold, if yes, the step 204 is executed, and if no, it is ended.

During a practical application, the smart device may acquire the communication quality parameter related to communication between the smart device and the gateway device. The communication quality parameter represents a quality of the communication between the smart device and the gateway device. If the quality of the communication between the smart device and the gateway device is poor, it may be considered that the smart device is in the idle state currently, and it is unnecessary to frequently communicate with the gateway device at this time.

The communication quality parameter may be a signal strength between the smart device and the gateway device. The smart device may detect the signal strength with the gateway device periodically and judge whether the signal strength is less than the preset threshold. If the signal strength is less than the preset threshold, it means that the quality of the communication between the smart device and the gateway device is poor, and it may be determined that the smart device is in the idle state currently. If the signal strength is greater than or equal to the preset threshold, it means that the quality of the communication between the smart device and the gateway device is good, and it may be determined that the smart device is not in the idle state currently.

It should be noted that, in the step 202 of this embodiment, the current running state is determined according to the preset idle period, if the current time point belongs to the preset idle period, it is determined that the smart device is in the idle state; and if the current time point does not belong to the preset idle period, the step 203 is executed, that is, the current running state is determined according to the communication quality parameter between the smart device and the gateway device. During a practical application, the smart device may also execute the step 202 and the step 203 respectively, that is, the current running state of the smart device is determined according to any one or both of the preset idle period and the communication quality parameter; or, the smart device may merely execute the step 203, that is, the current running state is determined according to the communication quality parameter, which is not limited in this embodiment.

In step 204, the energy saving mode is started if smart device determines that the current running state is the idle state.

It is determined that the smart device is in the idle state currently, in response to determining that the current time point belongs to the preset idle period, or in response to determining that the communication quality parameter is less than the preset threshold. If the smart device is currently in the idle state, it means that operations required to be executed by the smart device are fewer, and the user's demand on the performance may be met if the energy saving mode is started. Thus, in order to reduce the power consumption, the smart device may start the energy saving mode.

The step 204 may include at least one of steps (1) and (2) as follows:
(1) The smart device reduces a frequency of communication with the gateway device.
   The smart device may reduce the frequency of communication with the gateway device according to a preset communication frequency interval, such that a difference between an original communication frequency and a reduced communication frequency is equal to the preset communication frequency interval. Or, the smart device may reduce the communication frequency with the gateway device according to the preset communication frequency, such that the reduced communication frequency is equal to the preset communication frequency.
   The preset communication frequency interval and the preset communication frequency may be determined by the smart device in advance according to a communication frequency under general power consumption, which are not limited in this embodiment.
(2) The smart device closes the at least one target application already started.

During a practical application, the smart device may run at least one application, and the at least one application may include an application software program, a system process or a system thread etc., which is not limited in this embodiment.

The smart device may set a priority for each application. When starting the energy saving mode, the smart device may determine at least one target application having a priority lower than a preset priority according to the priority of each application already started. It may be considered that it is unnecessary for the smart device to run the at least one target application, and the at least one target application may be closed in order to reduce the power consumption of the smart device. The preset priority may be determined by the smart device according to the number of applications under each priority, which is not limited in this embodiment.

For example, priorities of five applications currently started are shown in Table 1 below. If the preset priority is 3, then it is determined that a priority 4 of an application E is lower than the preset priority 3, and thus the application E should be closed.

**Table 1**

| application | priority |
|---|---|
| application A | 1 |
| application B | 2 |
| application C | 2 |
| application D | 3 |
| application E | 4 |

Moreover, besides above steps (1) and (2), the smart device may also employ other manners to run in the energy saving mode, such as reducing a communication frequency of a central processor, or reducing a brightness of a display screen, which is not limited in this embodiment.

In a sequent process, the smart device may continue to judge whether the current time period belongs to the preset idle period, or to judge whether the communication quality parameter between the smart device and the gateway device is less than the preset threshold, thus determining the current running state. If it is determined that the smart device is in the idle state currently, the smart device continues to run in the energy saving mode, and if it is determined that the smart device is not in the idle state currently, the energy saving mode is shut down so as to run in a normal mode.

With the method provided by the embodiments of the present disclosure, by starting the energy saving mode if it is determined that the smart device is in the idle state currently according to the at least one of the communication quality parameter between the smart device and the gateway device and the preset idle period, the power consumption of the smart device is reduced as possible under the premise of meeting the user's demand on the performance of the smart device.

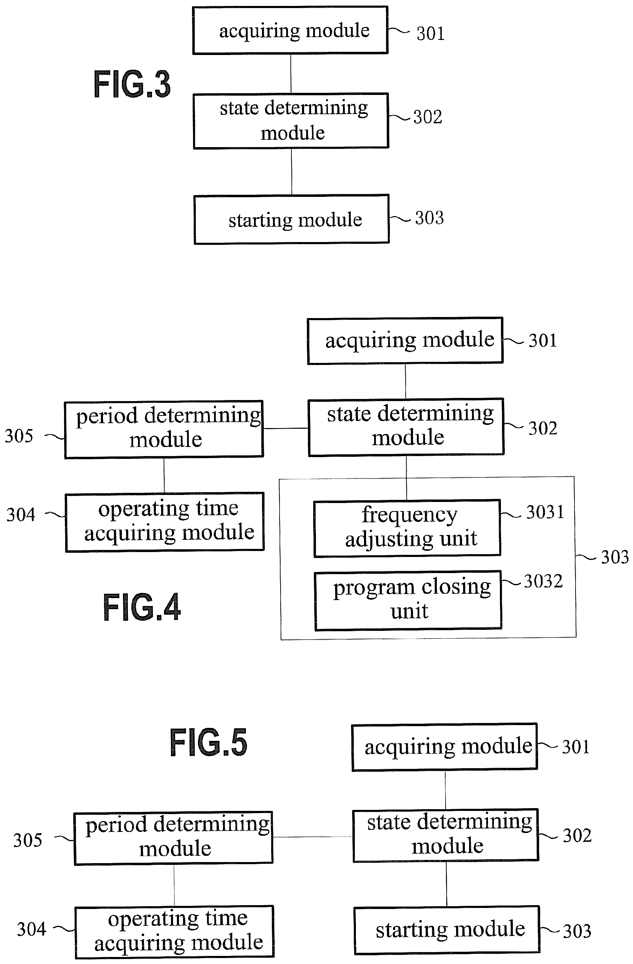

Fig. 3 is a block diagram of an apparatus for starting an energy saving mode, according to an example embodiment. With reference to Fig. 3, the apparatus includes an acquiring module 301, a state determining module 302, and a starting module 303.

The acquiring module 301 is configured to acquire a communication parameter with a gateway device. The communication parameter includes at least one of a communication quality parameter and a preset idle period.

The state determining module 302 is configured to determine a current running state according to the communication parameter acquired by the acquiring module.

The starting module 303 is configured to start the energy saving mode if the state determining module determines that the current running state is an idle state.

With the apparatus provided by the embodiments, by acquiring the communication parameter with the gateway device, the energy saving mode is started if it is determined that the current running state is the idle state according to the communication parameter. In this way, under the premise of meeting a user's demand on a performance of a smart device, a power consumption of the smart device is reduced as possible.

In another embodiment, the state determining module 302 is further configured to acquire a current time point indicated by a clock; and to determine that the current running state is the idle state in response to determining that the current time point belongs to the preset idle period.

Referring to Fig. 4, in another embodiment, the apparatus further includes:
an operating time acquiring module 304, configured to acquire at least one operating time in a historical operation record, in which the historical operation record is generated according to operation behaviors of a user; and
a period determining module 305, configured to determine the preset idle period according to the at least one operating time.

Referring to Fig. 5, in another embodiment, the starting module 303 includes at least one of:
a frequency adjusting unit 3031, configured to reduce a frequency of communication with the gateway device; and
a program closing unit 3032, configured to close at least one target application already started.

In another embodiment, the program closing unit 3032 is further configured to determine the at least one target application having a priority lower than a preset priority according to a priority of each application already started; and to close the at least one target application.

Alternative embodiments of the present disclosure may be formed by combining alternative technical solutions above in any way, which will not be elaborated herein.

With respect to the apparatus in the above embodiments, the specific manners for performing operations for individual modules therein have been described in detail in the embodiments regarding the method, which will not be elaborated herein.

It should be noted that, the apparatus for starting an energy saving mode provided by the embodiments above starts the energy saving mode, which is illustrated by a division of respective function modules above. In practical application, the function distribution above may be completed by different function modules in accordance with requirements, that is, an internal structure of the smart device is divided into different function modules to complete all or a part of functions described above. Further, the apparatus for starting an energy saving mode provided by the embodiments above and embodiments of the method for starting an energy saving mode belong to a same technical conception, and thus the specific implementation may refer to the embodiments of the method, which will not be elaborated herein.

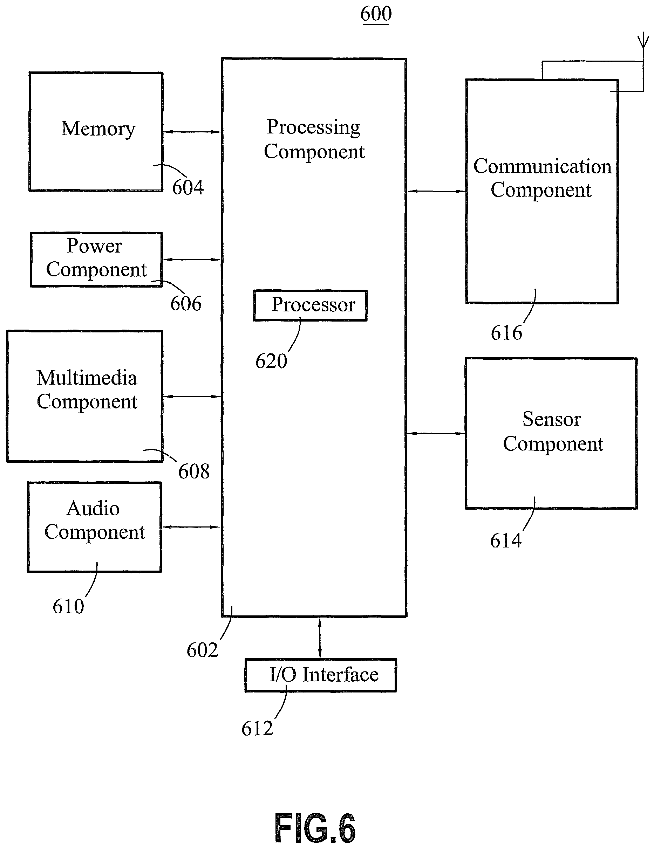

Fig. 6 is a block diagram of a device 600 for starting an energy saving mode, according to an example embodiment. For example, the device 600 may be a mobile phone, a computer, a digital broadcast terminal, a messaging device, a gaming console, a tablet, a medical device, exercise equipment, a personal digital assistant, and the like.

Referring to Fig. 8, the device 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect an open/closed status of the device 600, relative positioning of components, e.g., the display and the keypad, of the device 600, a change in position of the device 600 or a component of the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the device 600 and other devices. The device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as a memory 604 including instructions, the instructions may be executable by the processor 620 in the device 600, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of a smart device, causes the smart device to perform a method for starting an energy saving mode. The method includes:
acquiring a communication parameter with a gateway device, the communication parameter including at least one of a communication quality parameter and a preset idle period;
determining a current running state according to the communication parameter; and
starting the energy saving mode if it is determined that the current running state is an idle state.

In another embodiment, determining a current running state according to the communication parameter, includes:
acquiring a current time point indicated by a clock; and
determining that the current running state is the idle state in response to determining that the current time point belongs to the preset idle period.

In another embodiment, the method further includes:
acquiring at least one operating time in a historical operation record, in which the historical operation record is generated according to operation behaviors of a user; and
determining the preset idle period according to the at least one operating time.

In another embodiment, starting the energy saving mode includes at least one of:
reducing a communication frequency with the gateway device; and
closing at least one target application already started.

In another embodiment, closing at least one target application already started includes:
determining the at least one target application having a priority lower than a preset priority according to a priority of each application already started; and
closing the at least one target application.

## Claims

1. A method for starting an energy saving mode, comprising steps of:
acquiring (101) a communication parameter related to communication with a gateway device, the communication parameter comprising at least one of a communication quality parameter and a preset idle period;
determining (102) a current running state according to:
the communication quality parameter; or
the preset idle period; or
both the communication quality parameter and the preset idle period;
starting (103, 204) the energy saving mode if it is determined that the current running state is an idle state;
**characterized in that** the step of starting (103, 204) comprises a step of closing at least one target application already started, the step of closing comprising steps of:
determining the at least one target application having a priority lower than a preset priority according to a priority of each application already started; and
closing the at least one target application.

2. The method according to claim 1, wherein the step of determining (102) a current running state according to the preset idle period comprises steps of:
acquiring (201) a current time point indicated by a clock; and
determining (204) that the current running state is the idle state in response to determining (202) that the current time point belongs to the preset idle period.

3. The method according to claim 1 or 2, further comprising steps of:
acquiring at least one operating time in a historical operation record, wherein the historical operation record is generated according to operation behaviors of a user; and
determining the preset idle period according to the at least one operating time.

4. The method according to any one of claims 1 to 3, wherein the step of starting (103, 204) the energy saving mode comprises a step of reducing a frequency of communication with the gateway device.

5. An apparatus for starting an energy saving mode, comprising:
an acquiring module (301), configured to acquire a communication parameter related to communication with a gateway device, the communication parameter comprising at least one of a communication quality parameter and a preset idle period;
a state determining module (302), configured to determine a current running state according to:
the communication quality parameter acquired by the acquiring module; or
the preset idle period acquired by the acquiring module; or
both the communication quality parameter and the preset idle period;
a starting module (303), configured to start the energy saving mode if the state determining module determines that the current running state is an idle state;
**characterized in that** the starting module (303) comprises a program closing unit (3032) configured to close at least one target application already started, this program closing unit (3032) being further configured:
to determine at least one target application having a priority lower than a preset priority according to a priority of each application already started; and
to close the at least one target application.

6. The apparatus according to claim 5, wherein the state determining module (302) is further configured to acquire a current time point indicated by a clock; and to determine that the current running state is the idle state in response to determining that the current time point belongs to the preset idle period.

7. The apparatus according to claim 5 or 6, further comprising:
an operating time acquiring module (304), configured to acquire at least one operating time in a historical operation record, wherein the historical operation record is generated according to operation behaviors of a user; and
a period determining module (305), configured to determine the preset idle period according to the at least one operating time acquired by the operating time acquiring module.

8. The apparatus according to any one of claims 5 to 7, wherein the starting module (303) comprises: a frequency adjusting unit (3031) configured to reduce a frequency of communication with the gateway device.

9. A computer program including instructions for executing the steps of the method for starting an energy saving mode according to any one of claims 1 to 4, when said program is executed by a computer.

10. A recording medium readable by a computer and having recorded thereon the computer program according to claim 9.

## Patentansprüche

1. Verfahren zum Starten eines Energiesparmodus, umfassend Schritte des:
Erfassens (101) eines Kommunikationsparameters in Bezug auf die Kommunikation mit einem Gateway-Gerät, wobei der Kommunikationsparameter mindestens eines von einem Kommunikationsqualitätsparameter und einer voreingestellten Ruhezeit umfasst,
Bestimmens (102) eines aktuellen Betriebszustands gemäß:
dem Kommunikationsqualitätsparameter oder
der voreingestellten Ruhezeit oder
sowohl dem Kommunikationsqualitätsparameter als auch der voreingestellten Ruhezeit,
Startens (103, 204) des Energiesparmodus, wenn bestimmt wird, dass der aktuelle Betriebszustand ein Ruhezustand ist,
**dadurch gekennzeichnet, dass** der Schritt des Startens (103, 204) einen Schritt des Schließens mindestens einer bereits gestarteten Zielanwendung umfasst, der Schritt des Schließens umfassend Schritte des:
Bestimmens der mindestens einen Zielanwendung, die eine Priorität aufweist, die niedriger als eine voreingestellte Priorität ist, entsprechend einer Priorität jeder bereits gestarteten Anwendung, und
Schließens der mindestens einen Zielanwendung.

2. Verfahren nach Anspruch 1, wobei der Schritt des Bestimmens (102) eines aktuellen Betriebszustands gemäß der voreingestellten Ruhezeit Schritte umfasst des:
Erfassens (201) eines aktuellen Zeitpunkts, der durch eine Uhr angegeben wird, und
Bestimmens (204), dass der aktuelle Betriebszustand der Ruhezustand ist, als Reaktion auf das Bestimmen (202), dass der aktuelle Zeitpunkt zu der voreingestellten Ruhezeit gehört.

3. Verfahren nach Anspruch 1 oder 2, ferner umfassend Schritte des:
Erfassens mindestens einer Betriebszeit in einer historischen Betriebsaufzeichnung, wobei die historische Betriebsaufzeichnung gemäß Betriebsverhalten eines Benutzers erzeugt wird, und
Bestimmens der voreingestellten Ruhezeit gemäß der mindestens einen Betriebszeit.

4. Verfahren nach einem der Ansprüche 1 bis 3, wobei der Schritt des Startens (103, 204) des Energiesparmodus einen Schritt des Verringerns einer Häufigkeit der Kommunikation mit dem Gateway-Gerät umfasst.

5. Vorrichtung zum Starten eines Energiesparmodus, umfassend:
ein Erfassungsmodul (301), das konfiguriert ist, einen Kommunikationsparameter in Bezug auf die Kommunikation mit einem Gateway-Gerät zu erfassen, wobei der Kommunikationsparameter mindestens eines von einem Kommunikationsqualitätsparameter und einer voreingestellten Ruhezeit umfasst,
ein Zustandsbestimmungsmodul (302), das konfiguriert ist, einen aktuellen Betriebszustand zu erfassen entsprechend:
dem Kommunikationsqualitätsparameter, der durch das Erfassungsmodul erfasst wird, oder
der voreingestellten Ruhezeit, die durch das Erfassungsmodul erfasst wird, oder
sowohl dem Kommunikationsqualitätsparameter als auch der voreingestellten Ruhezeit,
ein Startmodul (303), das konfiguriert ist, dem Energiesparmodus zu starten, wenn das Zustandsbestimmungsmodul bestimmt, dass der aktuelle Betriebszustand ein Ruhezustand ist,
**dadurch gekennzeichnet, dass** das Startmodul (303) eine Programmschließeinheit (3032) umfasst, die konfiguriert ist, mindestens eine bereits gestartete Zielanwendung zu schließen, wobei diese Programmschließeinheit (3032) ferner konfiguriert ist:
mindestens eine Zielanwendung zu bestimmen, die eine Priorität aufweist, die niedriger als eine voreingestellte Priorität ist, entsprechend einer Priorität jeder bereits gestarteten Anwendung, und
die mindestens eine Zielanwendung zu schließen.

6. Vorrichtung nach Anspruch 5, wobei das Zustandsbestimmungsmodul (302) ferner konfiguriert ist, einen aktuellen Zeitpunkt, der durch eine Uhr angegeben wird, zu erfassen und zu bestimmen, dass der aktuelle Betriebszustand der Ruhezustand ist, als Reaktion auf das Bestimmen, dass der aktuelle Zeitpunkt zu der voreingestellten Ruhezeit gehört.

7. Vorrichtung nach Anspruch 5 oder 6, ferner umfassend:
ein Betriebszeit-Erfassungsmodul (304), das konfiguriert ist, mindestens eine Betriebszeit in einer historischen Betriebsaufzeichnung zu erfassen, wobei die historische Betriebsaufzeichnung gemäß Betriebsverhalten eines Benutzers erzeugt wird, und
ein Zeitbestimmungsmodul (305), das konfiguriert ist, die voreingestellte Ruhezeit gemäß der mindestens einen Betriebszeit, die durch das Betriebszeit-Erfassungsmodul erfasst wird, zu bestimmen.

8. Vorrichtung nach einem der Ansprüche 5 bis 7, wobei das Startmodul (303) umfasst: eine Häufigkeitsanpassungseinheit (3031), die konfiguriert ist, eine Häufigkeit der Kommunikation mit dem Gateway-Gerät zu verringern.

9. Computerprogramm, das Anweisungen zur Ausführung der Schritte des Verfahrens zum Starten eines Energiesparmodus nach einem der Ansprüche 1 bis 4, wenn das Programm von einem Computer ausgeführt wird, enthält.

10. Aufzeichnungsmedium, das von einem Computer lesbar ist und das Computerprogramm nach Anspruch 9 darauf aufgezeichnet aufweist.

## Revendications

1. Procédé pour lancer un mode d'économie d'énergie, comprenant les étapes :
d'acquisition (101) d'un paramètre de communication associé à une communication avec un dispositif de passerelle, le paramètre de communication comprenant au moins l'un d'un paramètre de qualité de communication et d'une période d'inactivité prédéterminée ;
de détermination (102) d'un état de fonctionnement actuel conformément :
au paramètre de qualité de communication ; ou
à la période d'inactivité prédéterminée ; ou
à la fois au paramètre de qualité de communication et à la période d'inactivité prédéterminée ;
de lancement (103, 204) du mode d'économie d'énergie s'il est déterminé que l'état de fonctionnement actuel est un état d'inactivité ;
**caractérisé en ce que** l'étape de lancement (103, 204) comprend une étape de fermeture d'au moins une application cible déjà lancée, l'étape de fermeture comprenant les étapes :
de détermination de ladite au moins une application cible ayant une priorité inférieure à une priorité prédéterminée conformément à une priorité de chaque application déjà lancée ; et
de fermeture de ladite au moins une application cible.

2. Procédé selon la revendication 1, dans lequel l'étape de détermination (102) d'un état de fonctionnement actuel conformément à la période d'inactivité prédéterminée comprend les étapes :
d'acquisition (201) d'un instant actuel indiqué par une horloge ; et
de détermination (204) que l'état de fonctionnement actuel est l'état d'inactivité en réponse à la détermination (202) que l'instant actuel appartient à la période d'inactivité prédéterminée.

3. Procédé selon la revendication 1 ou 2, comprenant en outre les étapes :
d'acquisition d'au moins un temps de fonctionnement dans un enregistrement de fonctionnement d'historique, dans lequel l'enregistrement de fonctionnement d'historique est généré conformément aux comportements de fonctionnement d'un utilisateur ; et
de détermination de la période d'inactivité prédéterminée conformément audit au moins un temps de fonctionnement.

4. Procédé selon l'une quelconque des revendications 1 à 3, dans lequel l'étape de lancement (103, 204) du mode d'économie d'énergie comprend une étape de réduction d'une fréquence de communication avec le dispositif de passerelle.

5. Appareil pour lancer un mode d'économie d'énergie, comprenant :
un module d'acquisition (301), configuré pour acquérir un paramètre de communication associé à une communication avec un dispositif de passerelle, le paramètre de communication comprenant au moins l'un d'un paramètre de qualité de communication et d'une période d'inactivité prédéterminée ;
un module de détermination d'état (302), configuré pour déterminer un état de fonctionnement actuel conformément :
au paramètre de qualité de communication acquis par le module d'acquisition ; ou
à la période d'inactivité prédéterminée acquise par le module d'acquisition ; ou
à la fois au paramètre de qualité de communication et à la période d'inactivité prédéterminée ;
un module de lancement (303), configuré pour lancer le mode d'économie d'énergie si le module de détermination d'état détermine que l'état de fonctionnement actuel est un état d'inactivité ;
**caractérisé en ce que** le module de lancement (303) comprend une unité de fermeture de programme (3032) configurée pour fermer au moins une application cible déjà lancée, cette unité de fermeture de programme (3032) étant en outre configurée :
pour déterminer au moins une application cible ayant une priorité inférieure à une priorité prédéterminée conformément à une priorité de chaque application déjà lancée ; et
pour fermer ladite au moins une application cible.

6. Appareil selon la revendication 5, dans lequel le module de détermination d'état (302) est en outre configuré pour acquérir un instant actuel indiqué par une horloge ; et pour déterminer que l'état de fonctionnement actuel est l'état d'inactivité en réponse à la détermination que l'instant actuel appartient à la période d'inactivité prédéterminée.

7. Appareil selon la revendication 5 ou 6, comprenant en outre :
un module d'acquisition de temps de fonctionnement (304), configuré pour acquérir au moins un temps de fonctionnement dans un enregistrement de fonctionnement d'historique, dans lequel l'enregistrement de fonctionnement d'historique est généré conformément aux comportements de fonctionnement d'un utilisateur ; et
un module de détermination de période (305), configuré pour déterminer la période d'inactivité prédéterminée conformément audit au moins un temps de fonctionnement acquis par le module d'acquisition de temps de fonctionnement.

8. Appareil selon l'une quelconque des revendications 5 à 7, dans lequel le module de lancement (303) comprend : une unité d'ajustement de fréquence (3031) configurée pour réduire une fréquence de communication avec le dispositif de passerelle.

9. Programme d'ordinateur comprenant des instructions pour exécuter les étapes du procédé pour lancer un mode d'économie d'énergie selon l'une quelconque des revendications 1 à 4, lorsque ledit programme est exécuté par un ordinateur.

10. Support d'enregistrement pouvant être lu par un ordinateur et sur lequel est enregistré le programme d'ordinateur selon la revendication 9.
